# EUROPEAN PATENT SPECIFICATION

(11) **EP 2 052 231 B1**
(45) Date of publication and mention of the grant of the patent: **02.11.2011**
(21) Application number: 06796236.5
(22) Date of filing: 27.07.2006
(51) Int. Cl.: G01N 1/28

(54) **DEVICE AND METHOD FOR THE PREPARATION OF BIOLOGICAL SAMPLES FOR CYTOLOGICAL AND HISTOLOGICAL ANALYSES**
VORRICHTUNG UND VERFAHREN ZUR HERSTELLUNG BIOLOGISCHER PROBEN FÜR ZYTOLOGISCHE UND HISTOLOGISCHE ANALYSEN
DISPOSITIF ET PROCÉDÉ POUR LA PRÉPARATION D'ÉCHANTILLONS BIOLOGIQUES À UTILISER DANS DES ANALYSES CYTOLOGIQUES ET HISTOLOGIQUES

(43) Date of publication of application: 29.04.2009
(73) Proprietor: Valenziano, Susanna, 20127 Milano (IT)
(72) Inventor: Valenziano, Susanna, 20127 Milano (IT)
(74) Representative: Long, Giorgio
(86) International application number: PCT/IT2006/000584
(87) International publication number: WO 2008/012847

(56) References cited:
- EP-A1- 0 804 958
- EP-A2- 0 765 727
- WO-A-2005/003346
- DE-A1- 19 612 487
- JP-A- 58 179 337
- US-A- 5 888 831

## Description

### FIELD OF THE INVENTION

The present invention refers to a device for the preparation of several biological samples to be employed in routine cytological, cyto-histological and histological analyses. Moreover, the invention regards a method for the preparation of said samples comprising an employment step of said device.

### STATE OF THE ART

It is known that diagnostic cytology is the branch of anatomical pathology which sets out to observe, with different detection instruments and methods, cells and/or cellular aggregates obtained in any manner, arranged on a slide and adequately fixed. The goal is to identify the altered cells and/or cellular groups and thus formulate a useful diagnostic hypothesis for the doctor, so to identify the present pathology. EP 0765727 and JP 58179337 discloses devices performing filtration.

Diagnostic cytology takes advantage of numerous techniques adapted to enhance the material obtained in any manner from tissues and/or organs of subjects and fit onto slides adapted to permit an appropriate study. The preparations follow the organic material drawing, in general realised in accordance with exfoliation techniques (spontaneous urine, expectorate, various liquids, appositions, etc.), abrasive techniques (pap-test, brushing, scraping of tissues and/or mucous, washings), invasive techniques (needle aspiration or FNAB). Moreover, technically, the preparations are usually subdivided into:
- slide preparations of the material drawn in accordance with any one of the aforesaid techniques and adequately fixed according to diagnostic needs (air fixing, fixing with alcoholic solution, etc.);
- preparations of material in liquid phase upon enrichment by means of centrifugation;
- preparations for material deemed to have little cellularity upon resuspension of the centrifuge bottom, and then cytocentrifugation directly on the slide;
- preparations for cyto-inclusion of material, in general microsediments, previously enriched and concentrated on the bottom of a test tube by means of trapping the same with various techniques (agar, celloidin, thromboplastin, etc.);
- preparations for cyto-inclusion of semi-solid material;
- specific preparations such as suspensions in Saccomanno Fluid, suspension of materials obtained by abrasion and "millipore" and/or "nucleopore" treatment, suspension in suitable means for differential separation (Sephadex®) and others.

All of the illustrated methods, normally used at cytology laboratories, foresee numerous technical steps including centrifugation, resuspension and cytocentrifugation, inclusion of the pellet residue in the test tubes after centrifugation. These steps are necessary in order to recover the study material in the form required by the particular type of study which must be carried out and by the related diagnostic query for which the exam is intended.

In particular, when the technician finds himself before a specific method to carry out on a biological sample, he must necessarily process the sample so to recover the material in a well-determined form so that he can realise the correct preparation. The optimisation of such operation requires a separation of the material of interest from all that surrounding it in the drawn material. In other words, the material which must be fit and analysed must be separated from all that which can alter the result of the preparation in any manner, and above all alter the following study. To do this, the technician is forced to carry out often delicate and laborious operations such as repeated centrifugations and resuspensions, with consequent waste of time, work materials and with the risk on the one hand of not accurately preserving the study material and on the other of losing important quantities of said material. Moreover, the centrifugations must be realised under specific and precise conditions according to the typology of preparation and study which must be carried out.

### SUMMARY OF THE INVENTION

The technical problem underlying the present invention is therefore that of providing a device and a corresponding method which permit reducing as much as possible the preparation steps of the biological material which must be prepared for different treatments, considerably increasing at the same time the effectiveness of the quality and quantity of the biological material available for the specific preparation.

Such problem is resolved by a filtration device with variable filtering capacity for separating cytological material, object of study, with very few, simple steps realisable also by non-specialised technicians.

Hence, a first object of the present invention is a device for the preparation of biological material for cytological and cyto-histological analyses with possible histological applications, as accordling to claim 1.

A second object is that of providing a method for the preparation of biological material for cytological and cyto-histological analyses with possible histological applications comprising the use of said device, as according to claim 1.

### BRIEF DESCRIPTION OF THE DRAWINGS

Further characteristics and advantages of the present of the present invention will be more evident from the following description of an embodiment, given merely as a non-limiting example, with reference to the figures wherein;
- Figure 1 represents an exploded, perspective view of a device embodiment of the invention;
- Figure 2 represents a perspective view of a variation of the device of figure 1 not part of the present invention;
- Figure 3 represents a perspective view of the device of figure 1 assembled with a container adapted for recovering the washing or liquid solution wherein the biological material to be recovered is suspended;
- Figure 4 represents a perspective view of the device of figure 1 coupled with a syringe during its functioning;
- Figure 5 represents an exploded, perspective view of a collection and storage device for biological samples;
- Figure 6 represents a perspective assembled view of the device of figure 5.

### DETAILED DESCRIPTION OF THE INVENTION

The idea underlying the present invention is that of providing a device which permits facilitating the preliminary operations of preparing a biological sample for processing with the different diagnostic cytology methodologies, such to standardise them without running the risk of losing or altering material in the sample itself.

A crucial step in any diagnostic cytology method is the separation of the material of interest from a sample drawn or collected from a subject. Usually such step comprises a series of obligatory steps, such as those described above with reference to the conventional methodologies, wherein the biological sample is treated in specific conditions according to the type of study which must be carried out. As is known, every type of treatment (centrifugation, resuspension, cytocentrifugation, etc.) requires the use of devices, supports for the samples and solutions which must be calibrated each time.

To simplify the operations of centrifugation and washing of the sample, a filtering device was designed which, with simple operations, permits obtaining the same result obtainable with classical methods.

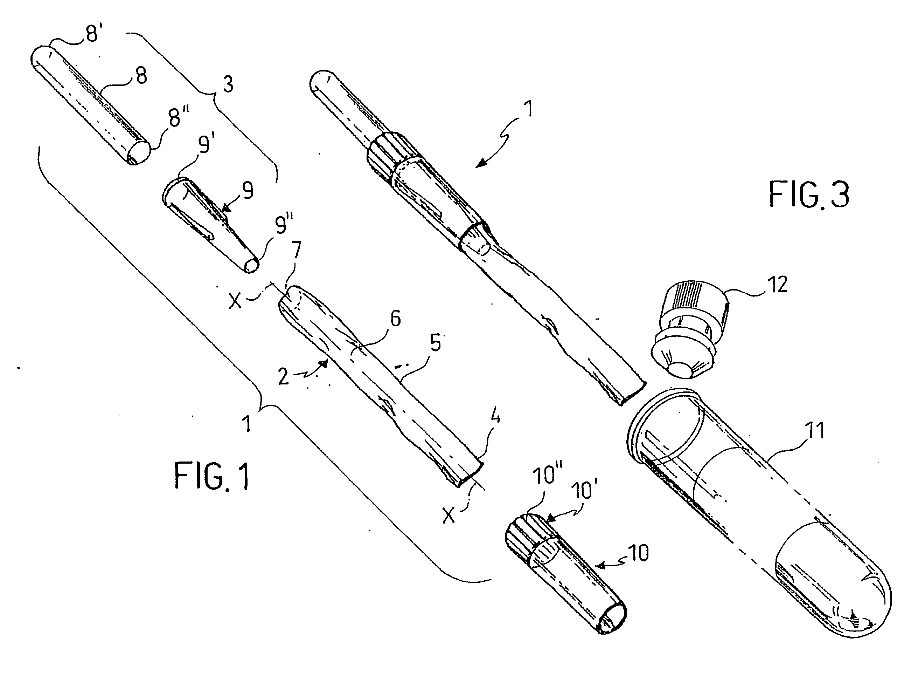

With reference to figure 1, the filtration/separation device 1 comprises a sack filter 2 coupled with a seat 3 adapted to reversibly and sealingly receive a cylinder of a syringe, said filter having a filtering capacity comprised between 1µm and 100µm.

The sack filter 2 presents itself as a bag of various sizes, but is generally such to be contained in a 100 ml laboratory test tube, equipped with a closed bottom 4, a body 5 which extends along a longitudinal X-X axis and is adapted to define an inner cavity 6, preferably substantially cylindrical, and an opening 7 opposite said bottom 4.

In particular, the sack filter 2 is composed of a network of hydrophobic fibres, for example of polymeric nature, such to realise a mesh having pores of dimensions varying from 1µm to 100µm. Preferably, the fibres which compose the mesh are polymeric fibres, such as for example nitrocellulose, nylon, polypropylene, polyester, Nomex^{®}, Kevlar^{®} PTFE, etc. More preferably, the sack filter 2 is composed of a nylon or polyethylene fibre sheet characterised by a melting point greater than 100°C, UV ray and heat resistance up to 150°C. In other words, the filter can constitute a kind of membrane having a three-dimensional filtering capacity determined by the size of the abovementioned pores.

According to a particular embodiment of the invention, the sack filter 2 can be realised by a sheet of said fibres folded on itself and sealed along two sides, leaving open one side opposite the bottom 4. In particular, the sealing can advantageously be realised by means of hot melt so to permit a subsequent opening of the sheet by simply separating the two folded edges. Such operation in fact permits more easily recovering in the technical step the material for cyto-inclusion in paraffin.

It is evident that, although the sheet which composes the sack filter has the characteristics of a soft fabric of sail type, the mesh structure of this material must have sufficient stiffness so to not permit a variation of the mesh itself.

The seat 3, as represented in figure 1, can be coupled on one side with the opening 7 of the sack filter 2 and on the other with the cylinder of a syringe, as will be better described below. Such seat can comprise a coupling portion 8 and a connection portion 9 adapted to move the material as close as possible to the bottom of the sack filter 2 and to facilitate the maintenance of the pervious inner cavity 6.

The coupling portion 8 is of substantially hollow cylindrical form, provided with a first end 8' adapted to be engaged with said syringe cylinder and a second end 8" adapted to be engaged with said connection portion 9, which in turn can be coupled with the opening 7 of the sack filter 2.

The connection portion 9 comprises a first end 9' which can be reversibly coupled with said second end 8" of the coupling portion 8 and a second end 9" insertable in the opening 7 of the sack filter 2. In particular, said insertion can occur by simply fitting the sack filter 2 on said connection portion 9. Preferably, the connection portion 9 has a hollow frustoconical form whose greater base (first end 9') realises the engagement with the coupling portion 8 while the smaller base (second end 9") is totally fit inside the sack filter 2, being pushed into it reaches about half of the sack depth. In this manner, the fluid containing the sample which must be filtered is advantageously directed towards the bottom, far from the inner wall of the sack filter, so to favour the deposit and collection of the material of interest only in proximity to the bottom 4 of said filter. It follows that less material is lost, and since the material is accumulated along the bottom of the filter, it can be more easily recovered and treated.

In accordance with an embodiment of the invention, the device 1 can also comprise stopping means 10, adapted to fasten in a reversible manner the sack filter 2 fit on the connection portion 9. Advantageously, then, even if the device 1 should be employed with fluid transmissions at relatively high pressures, the filter would not risk unthreading from the connection portion 9, with the consequence that during a filtration operation part of the material could be lost.

Preferably, the stopping means 10 are represented by an annular collar or, as represented in figure 1, by a hollow cylinder preferably comprising an end portion 10' equipped with gripping means 10" such as a knurled or variously grooved outer wall so to permit an easy grip when said means are engaged on the connection portion 9. In fact, the inner diameter of the hollow cylinder or annular collar will be slightly greater with respect to the outer diameter of the connection portion 9 so to permit an interference coupling with the interposition of the sack filter 2.

Further advantage deriving from the use of the hollow cylinder as stopping means is realised when the device is actuated after having been positioned inside a container such as a test tube. In fact, the hollow cylinder also functions as a kind of guide means for the filter, which is guided inside the test tube and kept away from its walls, thus favouring the correct filtering and possible recovery of the filtrate, if still cellular, useful for the diagnosis.

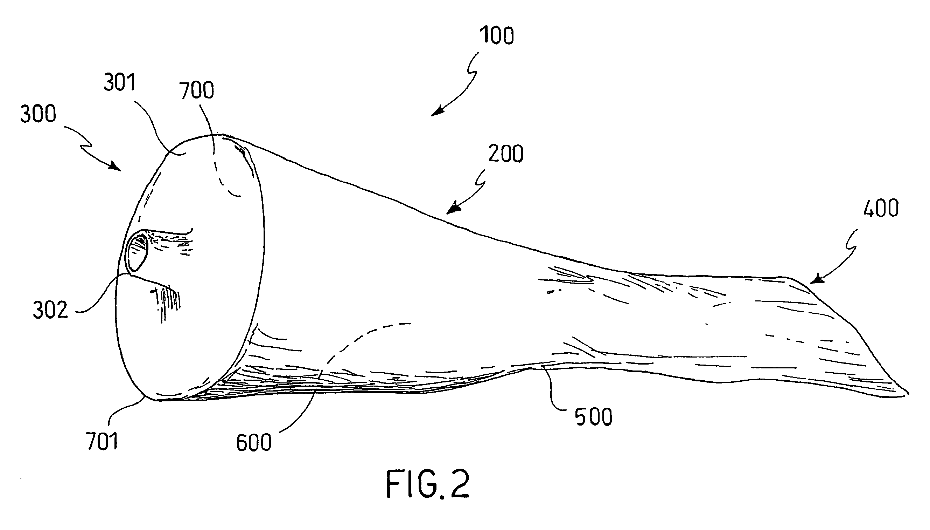

In accordance with an ilustration not part of the invention, the device 100, as represented in figure 2, can simply be constituted by the sack filter 200 substantially identical to that described above. Such filter comprises, in an analogous manner to the filter described above, a bottom 400, a body 500 which defines an inner cavity 600, and an opening 700 opposed to said bottom. In particular, the opening 700 is closed by a seat 300 represented by a disk 301 coupled to the edge 701 of the opening 700 of the sack filter and provided with hole 302 of engagement with a cylinder of a syringe.

The advantage obtained by the use of this type of device lies in the fact that when the filtration or washing of a biological sample does not require particular attention and handling the device 100 is simpler to use.

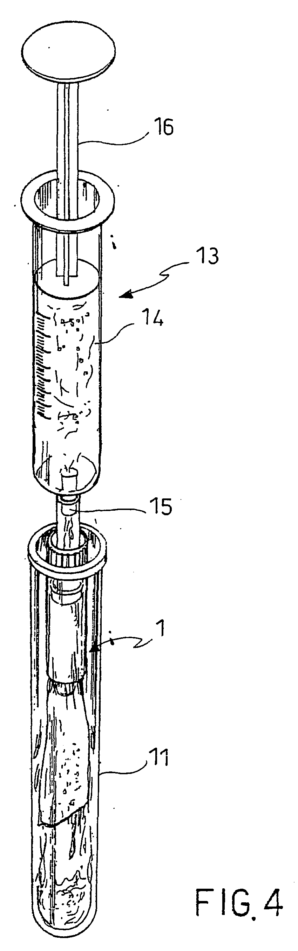

In figure 3, an assembled perspective view is represented of the device 1 of figure 1 and a test tube 11. As may be noted, the device 1 is assembled by inserting the coupling portion 8 in the connection portion 9 of the seat 3 for the coupling with a syringe 13 (shown in figure 4). Then the sack filter 2 is fit on the connection portion 9 so as to totally cover it. At this point, the stopping means 10 are in turn fit on the connection portion 9 of the seat 3, so to reversibly lock the sack filter 2 in position on said connector 9. The device 9 is now ready to be employed.

As represented in figure 3, the device 1 can be used in a container such as a test tube 11, possibly equipped with a cap 12. The device 1 can in fact be arranged at different filtering capacities and in different measurements adapted for different containers, such as test tubes, cups, etc.

In figure 4, the device 1 is represented in use. First of all, the device 1 was coupled to a syringe 13 employed for drawing of a biological sample to be tested by means of diagnostic cytology.

In particular, the device 1 assembled as described above is mounted on the cylinder 14 of the syringe 13 once the needle used for drawing the sample has been removed. The mounting occurs easily by means of the coaxial engagement of the cone 15 of the cylinder 14 for the discharge of the sample in the first end 8' of the coupling portion 8 of the device 1. In this position, the syringe 13 can be emptied by operating on the piston 16 so to make the liquid wherein the biological sample is dispersed pass along the filtering device 1 until it reaches the bottom 4 of the sack filter 2.

The main advantage which is obtained by the use of the filtering device of the invention is that of being able to realise a filtration/washing of the drawn sample with a conventional syringe in a rapid and effective manner without the use of complex devices which require laborious preparations of the sample itself.

In addition, the filtration/washing is realised in three-dimensional manner. In other words, the filtration can occur along several directions, i.e. on several levels, such that the separation of the material of interest from the sample drawn can occur in a rapid manner with respect for example to a conventional filtration with flat saturation filters in which, moreover, material may accumulate until it rapidly blocks the filter pores.

Furthermore, once the filtration/washing step is terminated, the sack filter 2 can be cut in proximity to its bottom 4, where the material is accumulated which must be subjected diagnostic study, and sealed as a kind of packet or closed, even with a simple clip. In this manner, the material of interest can be sent in full safety to the subsequent steps of histological working for the preparation of preparations for diagnostic and also prognostic use.

It should be noted that the device can also comprise two or more sack filters, coaxially mounted and having different filtering capacities. In this manner, if for example the innermost filter holds rougher material and the outer filter finer material, it is possible with a single filtering operation to separately recover two or more types of material.

From that described, it follows that the handling of the filtered/washed material is advantageously simple and can be applied to any type of preparation foreseen by diagnostic cytology, as reported in the introductive part of the present description, and with a possible use for histological material (e.g. VABRA, TURV, etc.).

Moreover, with the filtering device of the invention, the prearrangement of a huge number of slides can be can be avoided, as can the possibility of badly scraping the material on said slides, the pollution of haematic material and the non-adequate fixing.

On the other hand, the device permits reducing as much as possible the material which must be fixed, the same fixing operation which can be more correctly realised thus to obtain a greater enhancement of the material capable of carrying out the diagnostic query and possibly providing prognostic indications. Finally, the filtering device can permit a standardisation of the biological material treatment of cytological type (and others) capable of adapting the various currently used methodologies and thus permitting a more homogenous intra- and inter-laboratory exchange of information; it should be added that the ever-rising diffusion of telepathology, also in cytology, could make use of such invention since it can concentrate the diagnostic material on a small surface of the slide and not over all of the surface, as currently occurs through the preparation by strip.

From that described up to now, a second object of the present invention is a method for the preparation of biological material for cytological and histological analyses comprising the use of said device for filtering/washing a biological sample so to selectively recover said material.

In particular, the method comprises the steps of:
- making available a device 1; 100 as described above;
- operating a filtration/washing of said material by means of passage through said device;
- recovery of the material held in the bottom 4; 400 of the sack filter 2; 200 of said device.

The filtration/washing step can occur by means of the aid of a syringe as explained above. Once a biological sample is drawn with a conventional syringe, its needle is removed and the cylinder of the syringe is coupled, as said, to the filtering device of the invention. Then, the syringe is emptied by operating on the piston in an entirely conventional manner, ensuring that the drawn sample can pass through the sack filter.

The recovery step of the material held on the bottom of the sack filter occurs by means of cutting the sack in its proximal part, at a distance from the bottom, where the material of interest is collected, such to permit sealing the piece of the cut filter.

The material thus processed is ready to be sent to the next preparation step of histological type for the pre-selected analysis method.

It is evident that the method will be realised by using a device comprising a sack filter having a filtering capacity adapted to the type of preparation and study method present. For example, if the material obtained by means of needle-aspiration must be subjected to three-dimensional filtration, a device with 25-50 micron filtering capacity will be used; if the material is composed of a peritoneal and/or pleural liquid with little cellularity (limpid or sub-limpid), the use of a device with 10-20 micron capacity will be indicated. In any case, such choice will be made by a man skilled in the art based on his understanding and needs in each case.

The method of the invention can moreover comprise a step chosen from among cyto-inclusion, resuspension of the filtrate by cytocentrifugation, static cytometry and flow cytometry.

Further object of the present invention is a kit for the preparation of biological material for cytological and histological analyses comprising a filtering device like that described above, a syringe or syringe-tube, a contrast dye solution of the biological material for the cyto-histological study and an explanatory sheet which reports the use conditions of the device and syringe. Preferably, the kit can also comprise washing solutions for washing the drawn sample and/or solutions for diluting the sample and/or fixing solutions such as, for example, formalin, and/or transport solutions for bacteriological use, known in the sector.

In addition, the kit can comprise one or more slides.

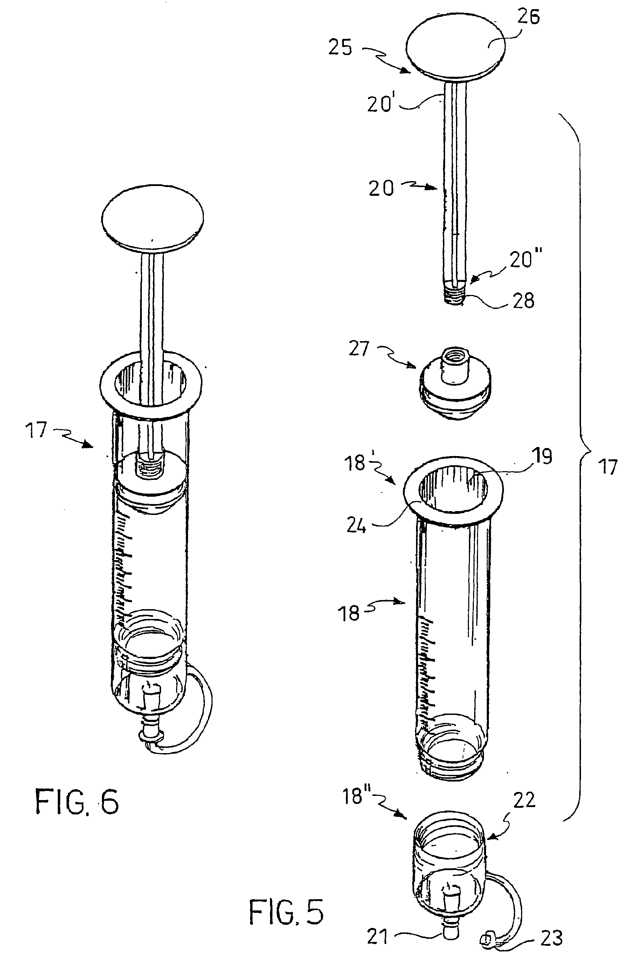

A further object not part of the invention is represented by a collection device of a biological sample which can be subjected to a morphological or other study, as represented in figure 5 and identified with the reference number 17.

It is known, in fact, that once a biological sample is drawn, it must be adequately treated and transported to the analysis laboratory, or in any case preserved until the time of analysis.

Currently, the types of containers for the collection of biological samples are represented by simple jars or glasses provided with cover, or they are test tubes with appropriate caps. These containers, even if common and of simple use, function mainly as collection containers from which it is subsequently necessary to draw the sample with appropriate instruments so to transfer it into further instruments or supports adapted to realise the desired pathological study.

It follows that to reach the work condition, the sample is subjected to intermediate passages which can cause damaging pollution, in order to obtain a correct diagnosis and/or possible errors of identification at each passage.

Alternatively, conventional syringes can be employed which, after having drawing the sample directly from the subject and having covered the needle with its cap, are sent to the analysis laboratory where they are emptied in order to release the sample On supports adapted for the requested analyses.

Also in this case, however, the syringes represent an intermediate stage between the drawing or collection of the sample and the support for the analysis or for the analysis preparation. Moreover, the syringe must be handled with care since the raised plunger can be easily hit, with the consequence that part of the sample leaks out. Furthermore, once it has arrived in the laboratory, the needle with its cap must be taken off the syringe so it can be emptied.

Such operations require a certain attention by the operators and in any case put the samples in risk of contamination.

To overcome these drawbacks, a collection and storage device was designed which permits reducing and simplifying the number of steps from the drawing of the biological sample to the first step of the sample preparation for the laboratory analysis.

With reference to figure 5, the collection and storage device 17 can comprise a possibly graduated container 18 provided with a first end 18' equipped with an opening 19 for the sliding, sealed insertion of a piston 20 and a second end 18" equipped with a cone 21 of engagement with a needle (not shown), wherein said second end 18" comprises a first cap 22, reversibly fixed to said container and a second cap 23 for the reversible closure of said cone 21.

In particular, the device 17 can be represented in its most general form by a conventional syringe lacking needle. The container 18, consequently, is composed of the cylindrical body of the syringe with the aforesaid first 18' and second 18" end.

The first end 18' is equipped like a conventional syringe, with a flanged edge 24 and opening 19 to permit the sliding and sealed insertion of the suction and emptying piston 20 of the syringe itself. In particular, the flanged edge 24 acts as a fitting in the syringe support for suction and as support base once the piston rod is unscrewed, as will be described below.

The piston 20 can be represented by a conventional piston for syringes comprising a rod 25 equipped at a first end 20' with a push or pull surface 26 and at the second end 20" with a seal 27.

Advantageously, the second end 20" can terminate with a threading 28 adapted to be reversibly engaged with a counter-threading made in the seal 27 in order to permit the disengagement of the rod from the syringe once the syringe is filled. In this manner, it is evident that the syringe can be transported avoiding the encumbrance of the rod and at the same time avoiding the danger of hitting it, causing a possible undesired leakage of the drawn sample. Moreover, once the destination has been reached, the syringe can be reassembled by once again screwing the rod in the seal, in order to empty the syringe by making the fluid pass through the device described above and collecting it in suitable test tubes or containers.

The first cap 22 of the second end 18" of the container 17 can be reversibly fixed to the container 19 simply by interference or, as shown in figure 5, by means of a thread - counter-thread coupling.

This particular embodiment permits opening the container 19 and emptying the contents more quickly and easily in the case wherein there is a slippery liquid sample. On the other hand, if it is a denser or more viscous liquid or if after the emptying by means of the piston action there should remain residues inside the container, the easy opening of the cap permits a rapid and convenient access for the removal of the residue material.

In addition, the container 18 can be advantageously equipped with a second cap 23 adapted to close the cone 21 of engagement with a needle. In this manner, once the drawing with the needle has taken place, it can be disassembled and the cone immediately closed with the second cap 23. This permits, on the one hand, avoiding leaving the needle coupled and covered by a not always sealed cap, and on the other hand realising an effective, simple-to-handle closure of the container.

In accordance with a embodiment variation, the device just described can also comprise a conventional tap (not shown) for the medical-hospital sector, applicable between the cone 21 and the filtering device 1; 100 described above. The tap can be of two-way type, so to permit introducing, from the outside into the container, an appropriate washing and fixing or preservative solution, and operating a washing of the container so to recover possible residue material. Then, operating on the tap, it is possible to close the outside passage and open a direct passage between the container and filtering device in order to operate a normal filtration as explained above.

A still further object of the present invention is a kit for the preparation of a biological sample to be subjected to cyto-histological studies comprising a collection device such as that described above, a filtering device and an explanatory sheet containing the explanation of the kit use.

It is evident that both the device and the container described can undergo sterilisation and subsequent sealing.

Preferably, moreover, the kit can comprise one or more solutions reported above with reference to the filtering device or further components such as slides and needles.

Of course, the man skilled in the art will be able to make numerous modifications to the device and container described, all moreover comprised in the protective scope of the following claims.

In addition, the container for transportation/storage/drawing described above is capable of standardising the processing and therefore can also be used in the mechanisation of the methodologies. For example, the use of bar codes applied on the outer surfaces of said containers adapted for the identification of the patient and material contained in them permits setting up a computerised device capable of drawing the containers and subjecting them to conventional emptying operations, through the aforesaid filtration device, and thus to completely uniform, conventional collection operations of the biological material to be analysed.

It should be noted that the filtration/separation device described above can be advantageously applied also in other sectors, such as in the botanical sector for the separation, for example, of cells from culture media, studies in the mineralogical sector for the separation of lean or other, in the oenological sector for separating sediments or impurities, and similar applications.

## Claims

1. Filtration separation device (1) comprising a sack filter (2) coupled with a seat (3) adapted to reversibly and sealingly receive a collection device of a biological sample, wherein the said sack filter (2) has a close bottom (4), a body (5) which extends along a longitudinal (X-X) axis and is adapted to define an inner cavity (6) and an opening (7) opposite said bottom (4) and wherein the said seat (3) comprises a coupling portion (8) and a connection portion (9), **characterized in that** the said connection portion (9) comprises a first end (9') and a second end (9"), the second end (9") bein insertable in the opening (7) of the sack filter (2) and totally a fittable inside the sack filter (2) to reach about one half of the sack depth.

2. Filtration separation device (1) according to claim 1, wherein said collection device of a. biological sample is a cylinder (14) of a syringe. (13).

3. Device (1) according to claim 1 or 2, wherein the sack filter (2) is composed of a hydrophobic fibre weave such as to realise a mesh having pores of size in the range of 1 µm - 100 µm.

4. Device (1) according to any one of the claims 1 - 3, wherein the sack filter (2) is composed of polymeric fibres chosen from among nitrocellulose, nylon, polypropylene, polyester, Nomex, Kevlar and the like; preferably the fibres are polyester.

5. Device (1) according to claim 4, wherein said sack filter (2) is represented by a sheet of said polymeric fibres folded on itself and sealed along two sides, leaving open a side corresponding to said opening (7) opposite said bottom (4).

6. Device (1) according to claim 2-5, wherein said coupling portion first end (8') is adapted to be engaged with said cylinder (14) of said syringe (13).

7. Device (1) according to claim 6, moreover comprising stopping means (10) adapted to fasten in a reversible manner the sack filter (2) fitted on said connection portion (9) of the seat (3).

8. Device (1) according to claim 7, wherein said stopping means (10) are represented by an annular collar or by a hollow cylinder.

9. Device according to any one of the claims 1 - 8, comprising at least two sack filters, coaxially mounted and having different filtering capacities.

10. Method for the preparation of biological material for cytological and histological analyses comprising the steps of:
- making available a device (1) according to any one of the claims 1 - 9;
- operating a filtration/washing of said material by means of passage through said device;
- recover of the material held in the bottom of the sack filter (2) of said device,
wherein the recovery step of the held material occurs by means of cutting the sack filter (2) in its proximal parti at a distance from the bottom (4) of said sack filter and its sealing.

11. Method according to claim 10, moreover comprising a step chosen from among cyto-inclusion, resuspension of the filtrate by cytocentrifugation, static cytometry and flow cytometry.

12. Kit for the preparation of biological material for cytological and histological analyses comprising a device (1) according to any one of the claims 1 - 9, a collection device for a biological sample, a contrast use biological material dye solution for cytological-histological study in a suitable container and an explanatory sheet which reports the use conditions of the device;
optionally comprising: in suitable containers, washing solutions for washing the drawn sample and/or solutions for diluting the sample and/or for fixing and/or transporting, and/or one or more slides, and/or a possibly graduated container (18) provided with a first end (18') equipped with an opening (19) for the sliding, sealed insertion of a piston (20) and a second end (18") equipped with a cone (21) of engagement with a needle, wherein said second end (18") comprises a first cap (22) reversibly fixed to said container and a second cap (23) for the reversible closure of said cone (21).

13. Device (1) according to any one of the claims 1 - 9, wherein said device is sterile.

## Patentansprüche

1. Filtrationsseparationsvorrichtung (1) mit einem Beutelfilter (2) gekoppelt an einen Sitz (3), der zum reversiblen und abdichtenden Aufnehmen einer Sammelvorrichtung für eine biologische Probe ausgebildet ist, wobei der Beutelfilter (2) ein geschlossenes Bodenteil (4), einen Körper (5), der sich entlang einer longitudinalen (X-X) Achse erstreckt und dazu ausgebildet ist, eine innere Kavität (6) zu definieren, und eine Öffnung (7) gegenüber dem Bodenteil (4) aufweist, und wobei der Sitz (3) einen Kopplungsabschnitt (8) und einen Verbindungsabschnitt (9) aufweist, **dadurch gekennzeichnet, dass** der genannte Verbindungsabschnitt (9) ein erstes Ende (9') und ein zweites Ende (9") aufweist, wobei das zweite Ende (9") in die Öffnung (7) des Beutelfilters (2) einsetzbar ist und vollständig im Innern des Beutelfilters (2) anpassbar ist, um in etwa bis auf die Hälfte der Beuteltiefe herabzureichen.

2. Filtrationsseparationsvorrichtung (1) nach Anspruch 1, wobei die Sammelvorrichtung für eine biologische Probe ein Zylinder (14) einer Spritze (13) ist.

3. Vorrichtung (1) nach Anspruch 1 oder 2, wobei der Beutelfilter (2) aus einem hydrophoben Fasergewebe gebildet ist, um damit ein Sieb mit Poren einer Größe aus dem Bereich von 1 μm bis 100 μm zu bilden.

4. Vorrichtung (1) nach einem der Ansprüche 1 bis 3, wobei der Beutelfilter (1) aus polymerischen Fasern gebildet ist, die aus Nitrozellulose, Nylon, Polypropylen, Polyester, Nomex, Kevlar und Ähnlichem ausgewählt sind, wobei die Fasern vorzugsweise Polyester sind.

5. Vorrichtung (1) nach Anspruch 4, wobei der Beutelfilter (2) durch ein Blatt der polymerischen Fasern gebildet ist, das auf sich selber gefaltet ist und entlang zweier Seiten versiegelt ist, sodass eine Seite korrespondierend mit der Öffnung (7) gegenüber dem Bodenteil (4) offengelassen ist.

6. Vorrichtung (1) nach Anspruch 2 bis 5, wobei das erste Ende (8') des Kopplungsabschnitts dazu angepasst ist, mit dem Zylinder (14) der Spritze (13) in Eingriff zu gelangen.

7. Vorrichtung (1) nach Anspruch 6, außerdem Haltemittel (10) aufweisend, die in einer reversiblen Art zum Fixieren des auf dem Verbindungsabschnitt (9) des Sitzes (3) befestigten Beutelfilters (2) ausgebildet sind.

8. Vorrichtung (1) nach Anspruch 7, wobei die Haltemittel (10) durch einen ringförmigen Kragen oder durch einen hohlen Zylinder gebildet werden.

9. Vorrichtung (1) nach einem der Ansprüche 1 bis 8, aufweisend wenigstens zwei Beutelfilter, die koaxial angeordnet sind und unterschiedliche Filterkapazitäten aufweisen.

10. Verfahren zur Präparation biologischen Materials für zytologische und histologische Analysen, aufweisend die Schritte:
- Verfügbarmachen einer Vorrichtung (1) nach einem der Ansprüche 1 bis 9;
- Durchführen einer Filtration/eines Waschens des Materials mittels einer Passage durch die Vorrichtung;
- Rückgewinnung des im Bodenbereich des Beutelfilters (2) der Vorrichtung zurückgehaltenen Materials,
wobei der Rückgewinnungsschritt für das zurückgehaltene Material mittels eines Abschneidens des Beutelfilters (2) in dessen Mittelteil erfolgt, mit einem Abstand vom Bodenteil (4) des Beutelfilters und von dessen Versiegelung.

11. Verfahren nach Anspruch 10, außerdem einen Schritt beinhaltend, der aus Zyto-Inklusion, Resuspension des Filtrats durch Zytozentrifugation, statischer Zytometrie und Flusszytometrie ausgewählt ist.

12. Ausrüstungssatz für die Präparation biologischen Materials für zytologische und histologische Analysen beinhaltend eine Vorrichtung (1) nach einem der Ansprüche 1 bis 9, eine Sammelvorrichtung für eine biologische Probe, eine Kontrast-Farbstofflösung für biologisches Material für zytologisch-histologische Untersuchungen in einem geeigneten Behältnis und einen Erläuterungsbogen, der die Verwendung der Vorrichtung beschreibt; optional beinhaltend: in geeigneten Behältnissen, Waschlösungen zum Waschen der gezogenen Probe und/oder Lösungen zum Auflösen der Probe und/oder zum Fixieren und/oder zum Transportieren, und/oder einen oder mehrere Objektträger, und/oder einen gegebenenfalls abgestuften Behältnis (18) mit einem ersten Ende (18'), das mit einer Öffnung (19) für die gleitende, abdichtende Einführung eines Kolbens (20) ausgestattet ist, und mit einem zweiten Ende (18"), das mit einem Konus (21) zum Verbinden mit einer Nadel ausgestattet ist, wobei das zweite Ende (18") eine erste, reversibel an dem Behältnis befestigte Kappe (22) aufweist, und eine zweite Kappe (23) zum reversiblen Verschluss des genannten Konus (21).

13. Vorrichtung (1) nach einem der Ansprüche 1 bis 9, wobei die Vorrichtung steril ist.

## Revendications

1. Dispositif (1) de séparation par filtration comprenant un filtre à sac (2) couplé à un siège (3) adapté pour recevoir de manière réversible et étanche un dispositif de collecte d'un échantillon biologique, dans lequel ledit filtre à sac (2) a un fond fermé (4), un corps (5) qui s'étend le long d'un axe longitudinal (X-X) et qui est conçu pour définir une cavité intérieure (6) et une ouverture (7) opposée audit fond (4) et où ledit siège (3) comprend une partie d'accouplement (8) et une partie de liaison (9), **caractérisé en ce que** ladite partie de liaison (9) comprend une première extrémité (9') et une deuxième extrémité (9"), la deuxième extrémité (9") pouvant être insérée dans l'ouverture (7) du filtre à sac (2) et pouvant être insérée complètement dans le filtre à sac (2) pour atteindre environ une moitié de la profondeur du sac.

2. Dispositif (1) de séparation par filtration selon la revendication 1, dans lequel ledit dispositif de collecte d'un échantillon biologique est un cylindre (14) d'une seringue (13).

3. Dispositif (1) selon la revendication 1 ou 2, dans lequel le sac à filtre (2) est composé d'un entrelacement fibreux hydrophobe de sorte à réaliser une maille ayant des pores d'une taille se trouvant dans la plage de lμm-100μm.

4. Dispositif (1) selon l'une quelconque des revendications 1 à 3, dans lequel le filtre à sac (2) est composé de fibres polymériques choisies parmi la nitrocellulose, le nylon, le polypropylène, le polyester, le Nomex, le Kevlar et autres éléments similaires ; de préférence les fibres sont en polyester.

5. Dispositif (1) selon la revendication 4, dans lequel ledit sac à filtre (2) est représenté par une feuille desdites fibres polymériques pliée sur elle-même et scellée le long de deux côtés, en laissant un côté ouvert qui correspond à ladite ouverture (7) opposée audit fond (4) .

6. Dispositif (1) selon les revendications 2 à 5, dans lequel ladite première extrémité (8') de la partie d'accouplement est adaptée pour être engagée avec ledit cylindre (14) de ladite seringue (13).

7. Dispositif (1) selon la revendication 6, comprenant en outre des moyens d'arrêt (10) adaptés pour fixer de manière réversible le filtre à sac (2) ajusté sur ladite partie de liaison (9) du siège (3).

8. Dispositif (1) selon la revendication 7, dans lequel lesdits moyens d'arrêt (10) sont représentés par un collier annulaire ou par un cylindre creux.

9. Dispositif (1) selon l'une quelconque des revendications 1 à 8, comprenant au moins deux filtres à sac, présentant un montage coaxial et des capacités de filtration différentes.

10. Procédé de préparation d'un matériau biologique pour des analyses histologiques et cytologiques comprenant les étapes qui consistent à _{:}
- fournir un dispositif (1) selon l'une quelconque des revendications 1 à 9 ;
- effectuer une filtration/un lavage dudit matériau au moyen d'un passage à travers ledit dispositif ;
- récupérer le matériau resté au fond du filtre à sac (2) dudit dispositif,
dans lequel l'étape de récupération du matériau resté se produit au moyen du découpage du filtre à sac (2) dans sa partie proximale, à une distance du fond (4) dudit filtre à sac et de son scellement.

11. Procédé selon la revendication 10, comprenant en outre une étape choisie parmi une cyto-inclusion, une résuspension du filtrat par cytocentrifugation, une cytométrie statique, et une cytométrie en flux.

12. Kit pour la préparation d'un matériau biologique pour des analyses histologiques et cytologiques comprenant un dispositif (1) selon l'une quelconque des revendications 1 à 9, un dispositif de collecte pour un échantillon biologique, une solution de colorant de matériau biologique à utiliser pour le contraste pour une étude histologique-cytologique dans un récipient approprié et une feuille d'explication qui rapporte les conditions d'utilisation du dispositif ;
comprenant optionnellement : dans des récipients appropriés, des solutions de lavage pour laver l'échantillon prélevé et/ou des solutions pour diluer l'échantillon et/ou pour le fixer et/ou pour le transporter, et/ou un ou plusieurs coulisseaux, et/ou un récipient (18) si possible gradué muni d'une première extrémité (18') équipée d'une ouverture pour le coulissement, l'insertion hermétique d'un piston (20) et une deuxième extrémité (18") équipée d'un cône (21) d'engagement avec une aiguille, dans lequel ladite deuxième extrémité (18") comprend un premier bouchon (22) fixé de manière réversible audit récipient et un deuxième bouchon (23) pour fermer de façon réversible ledit cône (21).

13. Dispositif (1) selon l'une quelconque des revendications 1 à 9, dans lequel le dispositif est stérile.
